# EUROPEAN PATENT APPLICATION

(11) **EP 4 527 602 A1**
(43) Date of publication of application: **26.03.2025**
(21) Application number: 24202292.9
(22) Date of filing: 24.09.2024
(51) Int. Cl.: B29C 70/68

(54) **COMPOSITE BUMPER AND METHOD FOR ITS MANUFACTURE**

(30) Priority: 21.09.2023 GB 202314526
(71) Applicant: Nissan Motor Manufacturing (UK) Ltd, Bedford Bedfordshire MK43 0DB (GB)
(72) Inventor: Desai, Shanta, Cranfield, MK430DB (GB)

(57) **Abstract**

According to an aspect of the invention there is provided a method of manufacturing a composite bumper (300) for a vehicle (200). The method comprises: introducing a bumper fascia material (302) around a preformed bumper reinforcement structure (304) in a mould, thereby forming a composite bumper (300) comprising a bumper fascia (302) with an integrated bumper reinforcement structure (304) for impact absorption. The bumper reinforcement structure (304) is configured to transmit impact forces, acting on the composite bumper in the event of a collision, to the chassis.

## Description

### TECHNICAL FIELD

The present invention relates to a composite bumper for a vehicle. Aspects of the invention relate to a composite bumper, to a vehicle, and to a method of manufacturing the composite bumper.

### BACKGROUND TO THE INVENTION

Vehicle bumpers are typically multifunctional assemblies that contribute towards enhancing the aerodynamics, aesthetics and collision protection of a vehicle, such as an automotive vehicle.

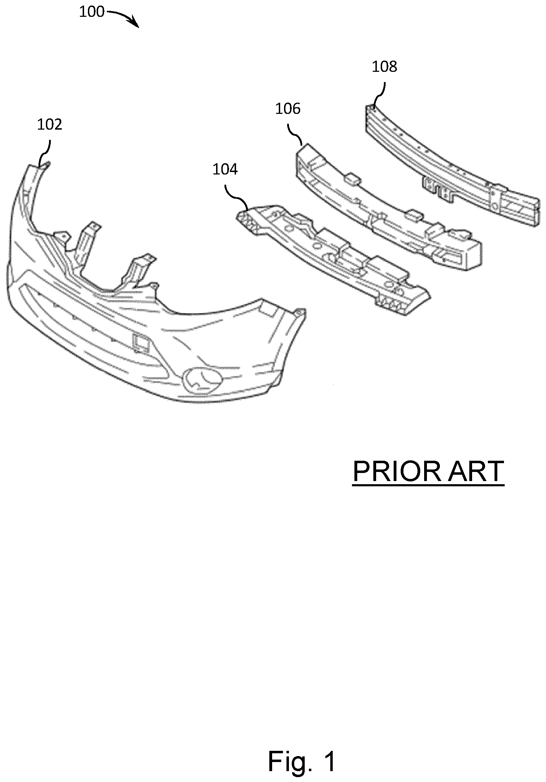

An exemplary prior art bumper assembly 100 is shown in Figure 1. The bumper assembly 100 includes a bumper fascia or cover 102, a shock or impact absorption component 104, a lower shield 106, and an impact or reinforcement bar 108. The components are generally assembled in longitudinal succession with each component fulfilling a particular role in the function of the overall bumper assembly 100.

The bumper cover 102 is principally designed for aerodynamic purposes, such as minimising drag, and for aesthetic qualities, whilst also providing a degree of impact protection. The bumper cover is therefore typically designed to have a certain level of strength and elasticity to mitigate damage from low energy bumps or impacts.

For this purpose, the bumper cover 102 is generally constructed from a polymer material comprising various fillers, such as glass beads, talc, or silica, to enhance strength and other desirable characteristics. The form or shape of the bumper cover is usually heavily stylised and regulated though such that the filler addition cannot provide resistance to higher energy impacts without significantly compromising other characteristics, such as the weight of the bumper.

Hence, additional components are attached to the bumper cover 102 in a traditional multi-component bumper assembly to satisfy such requirements. Each component of the bumper assembly 100 is therefore included for a specific role.

The impact absorption component 104 is installed behind the bumper cover 102 to provide energy absorption in frontal impact events. Generally, the impact absorption component 104 is designed as a sacrificial component with calibrated crush characteristics that effectively dissipate energy from the impact event. The impact absorption component 104 is mounted to the vehicle by the lower shield 106.

The impact bar 108 is a relatively stiff component used to absorb and redirect energy from frontal impacts to the vehicle chassis, particularly in the event of a relatively high energy collision. For this purpose, impact bars 108 are typically constructed in a simple geometric form for strength characteristics. The impact bar 108 is usually designed to provide some deformation, and absorb some of the impact energy, but has sufficient stiffness to prevent intrusion of the surrounding structures into the engine bay of the vehicle. Instead, the impact bar 108 is configured to redirecting impact loads to the relatively strong vehicle chassis. In this manner, the impact bar serves to reduce the risks of injury to pedestrians and other vulnerable road users, resulting from the collision itself or the intrusion of dangerous structures into the engine bay. Traditional impact bars are mostly made of high-strength steel, which has high strength and low production costs but a significant weight. High-strength steel is therefore not typically able to meet the needs of lightweight automobiles and conventional bumper assemblies are therefore relatively heavy, expensive to manufacture, and challenging to recycle in a cost-effective manner.

However, vehicle range, fuel efficiency and sustainability are increasingly important considerations in the automotive industry. It is against this background that the present invention is devised.

### SUMMARY OF THE INVENTION

According to an aspect of the invention there is provided a method of manufacturing a composite bumper for a vehicle. The method comprises: introducing a bumper fascia material around a preformed bumper reinforcement structure in a mould, thereby forming a composite bumper comprising a bumper fascia with an integrated bumper reinforcement structure for impact absorption. The bumper reinforcement structure is configured to transmit impact forces, acting on the composite bumper in the event of a collision, to the chassis.

In this context, the bumper reinforcement structure is preformed in the sense of being a unitary structure with sufficient structural integrity to be handled, manipulated and appropriately laid in the mould (prior to addition of the bumper fascia material), for example by a technician. The preformed bumper reinforcement structure may therefore provide a lattice structure of reinforcement material suitably arranged, joined and/or cured, to form a unitary self-contained structure. In examples, the bumper reinforcement structure may be fully or partially cured prior to introduction of the bumper fascia material. The bumper fascia material may be introduced around the bumper reinforcement structure so as to conceal at least one side of the bumper reinforcement structure. An opposing side of the bumper reinforcement structure is attachable to the vehicle chassis.

The bumper reinforcement structure can therefore be formed independently to produce intricate and/or complex support structures that may be optimised for mass-efficient impact protection in the event of a collision. The bumper fascia material is subsequently introduced around the reinforcement structure inside the mould, to advantageously surround and obscure that structure providing the desired aesthetic and aerodynamic characteristics of a conventional bumper, whilst retaining the structural robustness of the integrated structure. The resulting composite bumper can therefore be mounted to the vehicle chassis without an impact bar, reducing the number of components in the bumper assembly.

In an example, the method may further comprise a step, prior to forming the composite bumper, of preforming the bumper reinforcement structure. For example, the bumper reinforcement structure may be preformed using one or more additive manufacturing methods.

Optionally, the one or more additive manufacturing methods may comprise one or more tape laying or taping steering methods for laying a fibrous material comprising one or more fibres. Such additive manufacturing methods are capable of producing intricate, mass-optimised, shapes in a cost-efficient manner. The one or more fibres may, for example, comprise at least one layer of fibre-composite tape arranged according to a predetermined continuous path. The continuous path may optimise the mass and strength of the formed structure.

In an example, preforming the bumper reinforcement structure may further comprise joining the one or more fibres together to produce a unitary structure. Optionally, preforming the bumper reinforcement structure may comprise joining the one or more fibres by welding and/or by an adhesive.

In an example, the bumper reinforcement structure may be preformed outside of the mould prior to forming the composite bumper inside the mould. In this manner, the bumper reinforcement structure and the composite bumper can be formed in successive steps.

In an example, the bumper reinforcement structure may be preformed within the mould. In this manner, the same mould may be reused for multiple formation stages. Optionally, the preform may be cured inside the mould during the step of forming the composite bumper. For example, the perform may transition from a partially cured state to a fully cured state during the step of forming the composite bumper.

In an example, the method further comprises a step, prior to preforming the bumper reinforcement structure, of designing the bumper reinforcement structure, for integration into a bumper facia, using a computer-implemented design optimisation technique.

Computer-implemented design optimisation techniques may include one or more algorithms, rules or schemes configured to design mass-efficient structures, often having a complex form, based on a set of design conditions, such as a shape envelope and load conditions. The design optimisation technique may, for example, comprise a topology optimisation technique. For example, the topology optimisation technique may be configured to design an arrangement of reinforcement material within a boundary of the bumper fascia for transmitting impact forces, acting on the composite bumper in the event of a collision, to the chassis.

Optionally, the method may further comprise steps of: obtaining a model of the composite bumper; and providing the model as an input to the topology optimisation technique with one or more preset parameters. The one or more preset parameters may include: one or more load conditions; one or more properties of the reinforcement material; and/or one or more optimisation constraints, such as: a minimum stiffness or strength requirement, a minimum damping ratio for one or more impact load conditions. mass minimisation, and/or a manufacturing method choice. The model may be a two or three-dimensional model, such as a computer aided design (CAD) model, for example.

In an example, the topology optimisation technique may be configured to: iteratively assess the structural integrity of successive arrangements of reinforcement material when subjected to each load condition, and remove redundant reinforcement material based on the assessment for a subsequent iteration. In this manner, the design technique iteratively improves the bumper reinforcement structure for mass optimisation, amongst other characteristics.

Optionally, the bumper reinforcement structure may be a recycled bumper reinforcement structure obtained from another composite bumper. The method may further comprise a step, prior to introducing the bumper fascia material, of removing the preformed bumper reinforcement structure from a previous composite bumper. In this manner, the method is advantageously able to reuse components from prior composite bumpers, for example where the fascia material is damaged but the reinforcement structure remains intact.

Optionally, the preformed bumper reinforcement structure may be obtained by liquifying the bumper fascia material, and thereby removing the bumper reinforcement structure from the previous composite bumper.

In an example, the composite bumper may be formed by injection moulding, the bumper fascia material being injected into the mould. The bumper fascia material may be a two-part resin, for example, such as a polymer or a biopolymer.

According to another aspect of the invention there is provided a composite bumper for attachment to a chassis of a vehicle. The composite bumper comprises: a bumper fascia; and an integrated bumper reinforcement structure. The bumper reinforcement structure is integrated into, and extends along, the bumper fascia for impact absorption. The bumper reinforcement structure is configured to transmit impact forces, acting on the composite bumper in the event of a collision, to the chassis.

In this manner, the bumper fascia surrounds and obscures the reinforcement structure to provide the desired aesthetic and aerodynamic characteristics of a conventional bumper, while the integrated reinforcement structure can be mounted to the vehicle chassis directly and transmits loads thereto, consolidating the number of components in the bumper assembly.

In an example, the bumper reinforcement structure is a unitary lattice structure of reinforcement material. Optionally, the reinforcement material may be a fibrous material comprising one or more fibres. For example, the bumper reinforcement structure may comprise at least one layer of fibre-composite tape configured to form a load bearing member.

Optionally, a melting temperature of the bumper fascia material may be less than a melting temperature of a reinforcement material of the bumper reinforcement structure. In this manner, the bumper fascia material may be readily removed from the reinforcement structure, for example when damaged, by heating the bumper to the melting temperature of the bumper fascia material. The extracted bumper reinforcement structure can therefore be recycled and/or the bumper fascia material can be collected and reused.

In an example, the bumper fascia material may comprise a resin, such as a polymer or a biopolymer.

According to yet another aspect of the invention, there is provided a vehicle comprising the composite bumper described in a previous aspect of the invention or a composite bumper manufactured according to another previous aspect of the invention.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows an exemplary prior art bumper assembly for a vehicle;
Figure 2 schematically shows a side view of a vehicle in accordance with an embodiment of the invention;
Figure 3 schematically shows a plan view of an exemplary composite bumper in accordance with an embodiment of the invention;
Figure 4 shows a flow chart representation of an exemplary method of manufacturing the composite bumper, shown in Figure 3, in accordance with an embodiment of the invention;
Figure 5 schematically shows an exemplary topology optimisation process for determining an arrangement of reinforcement material for the composite bumper shown in Figure 3; and
Figure 6 schematically shows an exemplary injection moulding process for forming the composite bumper shown in Figure 3.

### DETAILED DESCRIPTION

Embodiments of the present invention relate to composite bumpers for attachment to a chassis of a vehicle, such as an automotive vehicle, and methods of manufacturing such composite bumpers.

The composite bumper consolidates a number of the components conventionally used in a traditional multi-component bumper assembly, such as the assembly 100 show in Figure 1, for mass reduction and improved recyclability.

For this purpose, the composite bumper features a bumper fascia and an integrated bumper reinforcement structure. The bumper reinforcement structure is a preformed structure optimised for mass-efficient impact protection in the event of a collision. The bumper reinforcement structure is integrated into the bumper fascia to incorporate the additional characteristics of one or more components of a conventional bumper assembly, such as the impact bar, in a single composite bumper component.

In examples, the bumper reinforcement structure may be designed using one or more computer-implemented design optimisation techniques, such as topology optimisation, for this purpose. Such design optimisation techniques can be used to produce a mass-efficient structure for transmitting various impact loads to the vehicle chassis, which acts as a major load bearing structure of the vehicle. For example, a topology optimisation method may be used to determine a predetermined continuous path for at least one layer of fibre-composite tape to form a bumper reinforcement structure capable of acting as a load bearing member and satisfying various frontal impact tests, such as a front pole test and a barrier test, amongst others. However, in order to achieve such mass efficiencies, it shall be appreciated that the reinforcement material is arranged into a complex skeletal structure that defines large openings such that the bumper reinforcement structure would be unsuitable as an exterior-facing body part.

Advantageously, the bumper reinforcement structure is therefore integrated into the bumper fascia, which surrounds and obscures the reinforcement structure to provide the desired aesthetic and aerodynamic characteristics of a conventional bumper. The composite bumper can therefore be mounted to the vehicle chassis without an impact bar and the number of components in the bumper assembly can be reduced.

It is envisaged that the composite bumper will therefore provide for vehicle mass reductions and range improvements, whilst satisfying collision protection requirements.

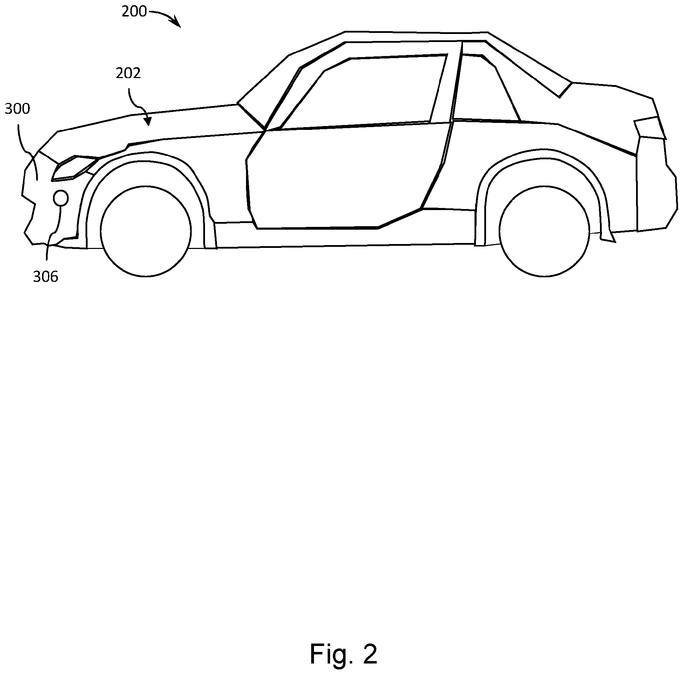

Examples of the composite bumper and methods of manufacture, shall now be discussed in more detail with reference to Figures 2 to 6.

With reference to Figure 2, an exemplary vehicle 200 is shown to include a vehicle body 202, made up of an assembly of external parts, supported on an underlying chassis (not shown), which acts as the main load bearing structure of the vehicle 200.

For the purposes of the following description, the directions up, down, forward, rearward, left, and right are defined relative to the general orientation of the vehicle 200 shown in Figure 2.

The vehicle body 202 is shown to include, amongst other components, a composite bumper 300 in accordance with an embodiment of the invention. In this example, the composite bumper 300 takes the form of a front bumper of the vehicle 200, providing protection during frontal impacts. However, it shall be appreciated that this example is not intended to be limiting on the scope of the invention and, in other examples, the composite bumper 300 may be designed for use as a rear bumper, or as a side bumper of the vehicle 200, providing protection during rear or side impacts.

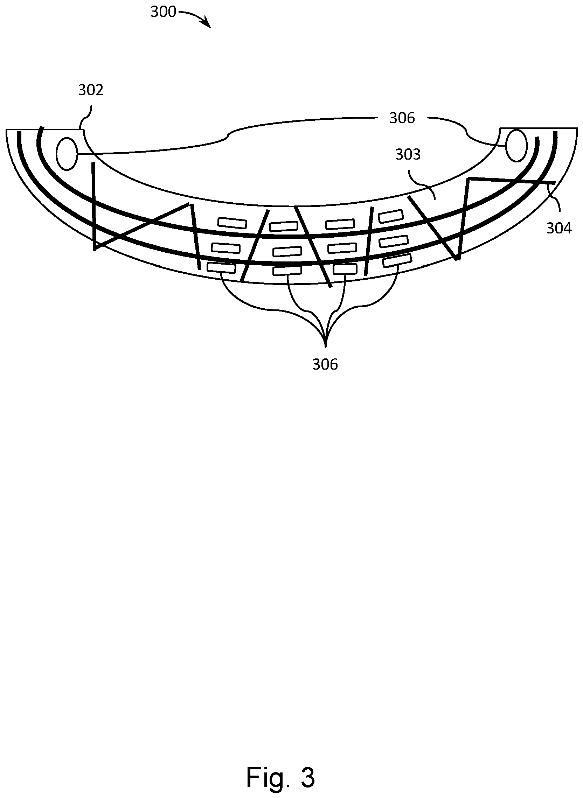

Figure 3 schematically shows a plan view of an exemplary composite bumper 300 in accordance with an embodiment of the invention.

The composite bumper 300 is a unitary structure for attachment to the vehicle chassis, particularly at a front end of the vehicle 200. The composite bumper 300 is configured to consolidate a number of the components used in a traditional multi-component bumper assembly, such as the bumper assembly 100 shown in Figure 1, to provide mass reduction and improved recyclability.

For this purpose, the composite bumper 300 includes a bumper fascia 302 and a reinforcement structure 304, integrated into the bumper fascia 302, for attachment to the vehicle chassis.

In this example, the composite bumper 300 is therefore intended to provide the combined functionality of the bumper cover and the impact bar of a conventional bumper assembly. In examples, the composite bumper 300 may therefore be attached to the vehicle chassis as a standalone body panel component or as part of a bumper assembly that further includes an impact absorption component 106, substantially as described in relation to Figure 1.

This example is not intended to be limiting on the scope of the invention though and, in other examples, the functionality of a conventional impact absorption structure may also be incorporated into the composite bumper 300, such that the composite bumper 300 may further replace the need for an additional impact absorption structure. As shall be described in more detail, such design configuration can be achieved by way of adjusting the performance constraints applied during the design and manufacture of the bumper reinforcement structure 304.

The bumper fascia 302 is shaped according to the design preferences of the manufacturer and may be geometrically very similar to the bumper cover 102 of the conventional bumper system 100 shown in Figure 1. That is, although the bumper facia 302 is only shown schematically (in two-dimensional form) in Figure 3, it shall be appreciated that the bumper facia 302 is a three-dimensional structure that is shaped and contoured to form an external surface of the vehicle body. A first surface (not shown in Figure 2) of the bumper fascia 302 is therefore configured to act as an exterior surface, or A-surface, of the vehicle 200, while an opposing second surface 303 of the bumper fascia 302 forms an interior surface, or B-surface, of the vehicle 200.

The A-surface of the bumper fascia 302 is therefore configured to complement the aesthetics and aerodynamic profile of the vehicle 200. The bumper fascia 302 may therefore also include various openings 306, as shown in Figure 3, for respective vehicle air ducts and/or accessories, such as the headlights.

The bumper fascia 302 may be formed of a polymer or biopolymer matrix material in examples. Such matrix materials are particularly suited to manufacture by injection moulding techniques, which allow for integration of a preformed bumper reinforcement structure 304 by introduction of bumper fascia material around the preformed structure in a corresponding mould. The matrix material may, for example, be a thermoplastic or a thermoset material, each having a differing manufacturing process as shall be explained in more detail below.

The bumper reinforcement structure 304 is integrated into the bumper facia 302 to form the unitary composite bumper 300 without mechanical fasteners. The bumper reinforcement structure 304 forms a skeletal structure for reinforcing the bumper fascia 302 and provides the impact response characteristics of a conventional impact bar. In this respect, the bumper reinforcement structure 304 is configured to transmit impact forces, acting on the composite bumper 300 in the event of a collision, to the vehicle chassis. In examples, the bumper reinforcement structure 304 may therefore be deformable enough to absorb some impact energy, but possess sufficient stiffness to prevent intrusion of the surrounding structures into the engine bay of the vehicle 200 - in particular by redirecting impact loads to the relatively strong vehicle chassis.

Accordingly, in the event of a collision, the bumper reinforcement structure 304 is configured to transfer the impact loads along one or more predefined load paths to the vehicle chassis through one or more respective mounting points. It shall be appreciated that the structural integrity of the bumper reinforcement structure 304 can be verified by various methods that are known in the art, including the simulation and physical testing of the response to a variety of frontal impact loads in accordance with well-established industry standard requirements, such as front pole tests and front barrier tests, amongst others.

In order to provide such structural integrity, the bumper reinforcement structure 304 comprises a skeletal arrangement of reinforcement material within a boundary of the bumper fascia 302, as shown in Figure 3. For example, the bumper reinforcement structure 304 may have a two or three-dimensional lattice structure resulting from a computer-implemented design optimisation. In Figure 3, the skeletal structure is shown to extend along the width and the height of the bumper fascia 302, between the openings 306, defining a complex and non-uniform structure.

The bumper reinforcement structure 304 is formed from one or more reinforcement materials, which may include fibrous materials, metals, ceramics, and/or polymer materials. For example, the bumper reinforcement structure 304 may comprise one or more fibre materials, such as glass fibre, carbon fibre, Kevlar fibre, or aramid fibre, that are joined together to form a unitary structure. The fibres may be unidirectional and/or the fibres may extend along a load path defined by impact analysis of the bumper design. The one or more fibres may be joined together to form the unitary structure, web, or lattice, accounting for the fact that the load paths will vary depending on the type of impact, i.e. depending on the direction and magnitude of the impact. The fibres may be joined together by an adhesive or by welding, such as spot welding, for example.

In examples, the one or more fibres may comprise at least one layer of fibre-composite tape extending along a length of the bumper reinforcement structure 304 in a predetermined continuous path. For example, this continuous fibre may have been dispensed in such form by a tape dispenser on the end of a robotic arm.

In examples, the fibrous material could comprise one or more of the following: dry fibre; thermoplastic prepreg; thermoset prepreg; comingled CF-polymer fibre; or comingled fibre glass/aramid/Kevlar/natural fibre with different polymer fibres PP/PLA/Biobased polymer fibres/etc. It shall be appreciated that, in the case where the bumper reinforcement structure 304 comprises a prepreg fibre material, the fibres are inherently adhesive, not featuring any welding or the application of additional adhesive.

In other examples, it is envisioned that the bumper reinforcement structure 304 may be formed from ceramics, metals, or polymers by one or more other additive manufacturing techniques. For example, the bumper reinforcement structure 304 may be formed by a computer-controlled process that creates a three-dimensional structure by depositing and/or curing of such materials.

The bumper reinforcement structure 304 therefore includes reinforcement material arranged into a unitary structure that reacts to loads efficiently in the event of a collision, providing a mass efficient structure without compromising the overall strength or impact protection of the bumper.

For this purpose, the bumper reinforcement structure 304 may be designed using one or more computer-implemented design or shape optimisation methods, such as topology optimisation. For example, topology optimisation techniques use algorithmic models to optimize material layout within a user-defined space for a given set of loads, conditions, and constraints. In this context, the set of loads can be determined or calculated from industry standard impact requirements, engineering calculations and/or historical data, such as previous impact testing, amongst other sources. Hence, an optimal arrangement of reinforcement material can be determined for the bumper reinforcement structure 304, which is suitable for integration into a desired bumper fascia shape and minimises the mass of reinforcement material used.

The arrangement of reinforcement material may therefore be configured to satisfy one or more conditions including, amongst others, a minimum stiffness requirement for transmitting one or more impact forces to the vehicle chassis, and/or a minimum damping ratio for damping one or more impact forces acting on the composite bumper 300. In this respect, it shall be appreciated that the stiffness requirement may correspond to the stiffness characteristics typically provided by the impact bar of a conventional bumper assembly. Similarly, the damping requirements may correspond to the damping requirements typically provided by the impact absorption component of a conventional bumper assembly. In this manner, the design optimisation methods provide for part consolidation by incorporating the functionality of one or more of the conventional bumper assembly parts into the bumper reinforcement structure 304.

As shown in Figure 3, the resulting bumper reinforcement structure typically defines large openings in the bumper reinforcement structure 304. If the bumper reinforcement structure 304 were mounted to the vehicle as an external component, and left exposed, the large gaps would significantly increase aerodynamic drag, allow observers to see under the vehicle body, and admit large quantities of road spray. Hence, the bumper reinforcement structure 304 is integrated into the bumper fascia 302, which provides aesthetic covering and aerodynamically tailored surfaces.

The result is a composite bumper 300 that is mass efficient without compromising the overall strength of the component/system.

It is envisaged that the composite bumper 300 will therefore provide for body part consolidation and mass reductions, ultimately contributing to improved vehicle range and efficiency.

Methods of manufacturing the composite bumper 300, in accordance with an embodiment of the invention, shall now be discussed in more detail below.

In general, the composite bumper 300 is formed in a mould by introducing the bumper fascia material around the bumper reinforcement structure 304. The bumper facia material is subsequently cured or solidified inside the mould to form a unitary structure with the bumper reinforcement material integrated (at least partially) within the cured bumper fascia material.

The bumper reinforcement structure 304 is therefore preformed as part of the manufacturing process. That is, the reinforcement material is suitably arranged, joined and/or cured, to form the bumper reinforcement structure 304 prior to introducing the bumper fascia material to the mould. In examples, the bumper reinforcement structure 304 may be fully or partially cured prior to introduction of the bumper fascia material, and the bumper reinforcement structure 304 may be formed independently. For example, the bumper reinforcement structure 304 may be formed in the same mould or another mould.

Once solidified, the composite bumper 300 can be removed from the mould and one or more finishing processes may be applied to improve the surface finish and/or to create any desired openings 306 in the bumper fascia 302, e.g. for accommodating one or more vehicle accessories.

It shall be appreciated that the composite bumper 300 may therefore be formed according to various methods in accordance with embodiments of the invention.

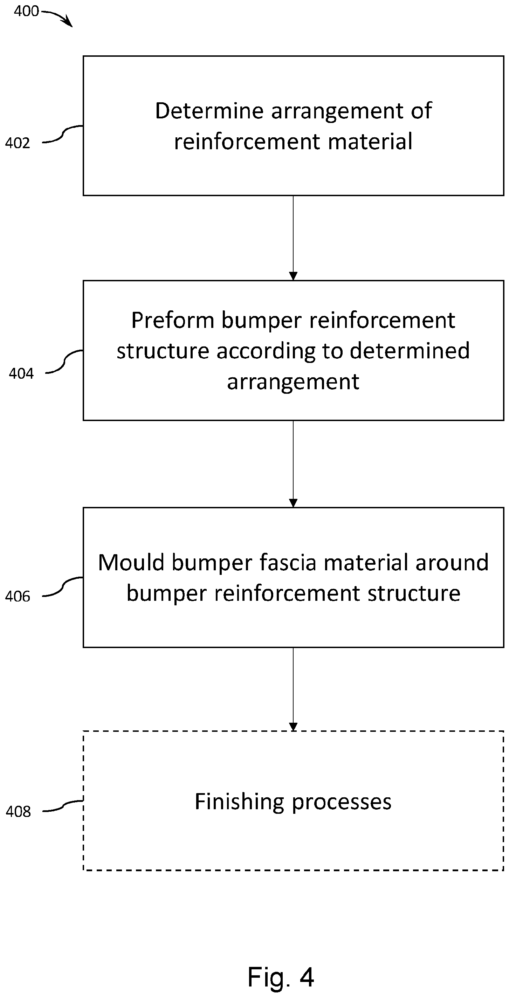

By way of example, a method 400 of manufacturing the composite bumper 300, in accordance with an embodiment of the invention, shall now be described with additional reference to Figures 4 to 6.

Initially, it is necessary to determine a layout, arrangement, or design of reinforcement material for ensuring that the composite bumper 300 satisfies various impact response standards (during a frontal collision), as defined by the manufacturer and/or within the relevant industry.

In step 402, the method 400 therefore involves determining an arrangement of the reinforcement material for forming the bumper reinforcement structure 304.

To give an example, the arrangement of reinforcement material may be determined using one or more computer-implemented design or shape optimisation methods, such as topology optimisation.

A topology optimisation method uses algorithmic models to optimize material layout within a user-defined space for a given set of loads, conditions, and constraints. In this manner, in step 402, a manufacturer may obtain or otherwise produce a model, such as a 2D or 3D CAD model, representative of a desired shape of the composite bumper 300, or a profile thereof. The model is provided as an input to the topology optimisation algorithm(s) along with one or more preset parameters, including load conditions (corresponding to anticipated impacts), reinforcement material type/properties, and/or optimisation constraints, such as mass minimisation and/or manufacturing method choices. The load conditions may be determined with reference to industry standards, engineering calculations and/or historical data, while the optimisation constraints may include, amongst others, a minimum stiffness or strength requirement, and/or a minimum damping ratio for one or more impact load conditions.

Based on such inputs, the topology optimisation algorithm(s) are configured to: (i) assess the structural integrity of the structure, for example using a Finite Element Method (FEM), when subjected to the different load conditions, and (ii) identify redundant material for removal based on the assessment. The topology optimisation algorithm(s) therefore iterate through various designs to produce a single optimized arrangement of bumper reinforcement material that fits within the modelled bumper fascia profile and satisfies the design constraints with minimum material. Each design may therefore be tested, verified and refined, and a final design may be output once the optimised arrangement has been determined. For example, the final design may be a continuous fibre pattern that extends along respective load paths to define a skeletal structure that satisfies the various collisions tests.

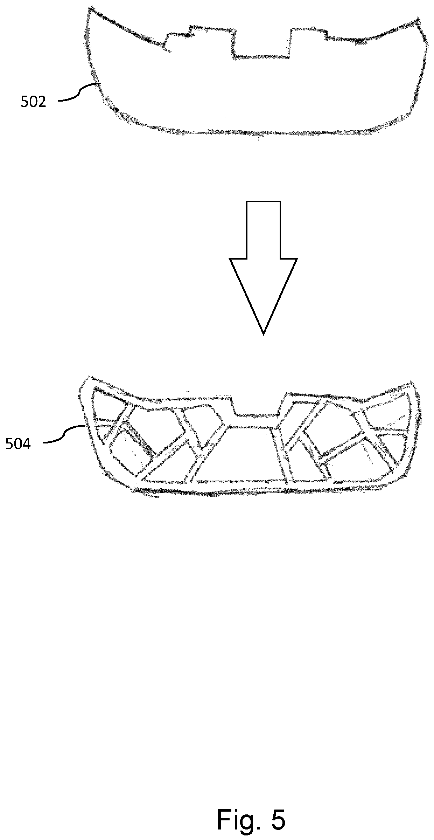

By way of illustration, Figure 5 schematically shows a model 502 of the composite bumper that may be provided as an input to the topology optimisation algorithm(s) and a computer-generated output 504 from the topology optimisation algorithm(s). The output specifies an arrangement of reinforcement material, that fits within the profile of said model, for forming the bumper reinforcement structure 304.

It shall be appreciated that, depending on the reinforcement material used, the determined arrangement may, for example, correspond to the location and orientation of fibres and/or the structure of deposited material. In each case, the computer-implemented design method allows for efficient use of material and eliminates material placement in redundant areas. In this respect, the topology optimisation technique is particularly useful for determining a continuous pattern of fibre-composite tape defining the bumper reinforcement structure 304.

Returning to Figure 4, once the arrangement of reinforcement material has been determined, the bumper reinforcement structure 304 is formed, in step 404, according to one or more methods known to the person skilled in the art.

The method used for forming the bumper reinforcement structure 304 is expected to vary depending on the choice of reinforcement material and the complexity and/or intricacy of the determined arrangement. In this respect, different manufacturing methods are associated with respective manufacturing constraints and, in each case, such manufacturing constraints can be incorporated as inputs to the design optimisation technique, applied in step 402, to ensure that the determined arrangement can be realised.

To give an example, such methods of preforming the bumper reinforcement structure 304 may include one or more additive manufacturing methods, such as tape laying and/or 3-D printing.

In particular, the reinforcement material may advantageously take the form of a fibre-composite tape and the bumper reinforcement structure 304 may be preformed, in step 404, using an automated fibre placement process, such as tape laying or tape steering. Tape laying/steering processes are a form of additive manufacturing, involving the operation of a tape dispenser on the end of a robotic arm. The fibre-composite tape comprises one or more fibres together and is typically laid in the pattern of the determined arrangement on the surface of a corresponding mould, whilst applying pressure and heat. Tape laying/steering method may lay a single continuous fibre or multiple fibres that may be formed into a unitary or monolithic structure by welding and/or by an adhesive, for example.

A specialised tape steering method may be used if the determined arrangement precludes twisting of the fibre over curved paths or 3D features in order to ensure the properties of the fibre are not compromised. Basic spot welding/ adhesive method will be used to handle the laid fibres in shape. This laid fibre skeleton constitutes the 'preform' in this example.

In other examples, various additive manufacturing methods, such as selective laser sintering, may be used for forming bumper reinforcement structure 304 instead. Such methods are well-known to the skilled person though and will not be described in detail here to avoid obscuring the invention.

In examples, it shall be appreciated that the bumper reinforcement structure 304 may be preformed, in step 404, outside of the mould used for the bumper fascia, allowing the preparation of the reinforcement material separately and independently of the final moulding process. The preformed bumper reinforcement structure 304 may then be laid into the mould of the composite bumper 300, ensuring that the structure is placed in the appropriate location and orientation. Alternatively, the bumper reinforcement structure 304 may be formed directly within the mould, and the mould may be used as an underlying surface or support for the deposition of the reinforcement material. In the interest of cycle time reduction, this process may be automated as opposed to a manual process where an operator is tasked with laying the material in the mould by hand.

In step 406, the bumper reinforcement material is introduced around the bumper reinforcement structure 304 in the mould to form the composite bumper.

The invention is not intended to be limited to a particular moulding processes, but exemplary moulding process for forming the composite bumper 300, in step 406, include injection moulding, resin transfer moulding (RTM), and/or structural reaction injection moulding (SRIM), amongst others. Here, it shall be appreciated that the mould used corresponds to the desired shape of the desired composite bumper 300.

For example, injection moulding may be used if the selected matrix material is a thermoplastic material. A high strength mould is required for this process, which is performed at relatively high temperature and pressure. The selected matrix material is melted into a relatively low viscosity fluid and injected into the mould around the preformed bumper reinforcement structure 304. The injected matrix material fills the mould and subsequently cools and solidifies, forming the composite bumper 300 with the bumper reinforcement structure 304 integrated into the bumper fascia 302 for impact absorption.

Alternatively, for thermoset plastics, RTM and SRIM are similar methods known for producing composite components. The differences are relatively subtle, and would be apparent to the skilled person, so a detailed discussion is omitted to avoid obscuring the invention. Each process provides a repeatable production of thermoset or resin based composite components, such as thermoset polymers or biopolymers. In these processes a preformed bumper reinforcement structure 304 is added to the empty mould cavity with the fibrous reinforcement material being arranged in selected locations and orientations in the case of directional fibre reinforcement. The mould cavity is then closed, and the resin is introduced to the cavity where it impregnates the reinforcement material and fills the mould cavity before quickly solidifying.

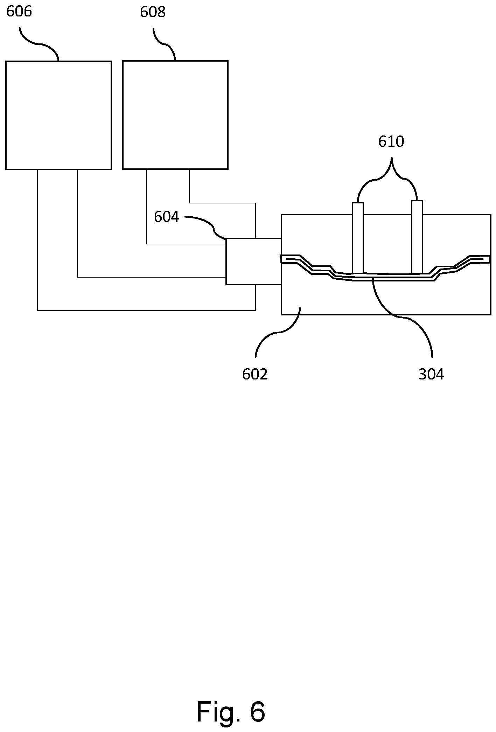

Figure 6 schematically illustrates an exemplary reaction injection moulding process. The preformed bumper reinforcement structure 304 is supported in the mould 602 and the bumper fascia material is injected into the mould 602, around the bumper reinforcement structure 304, from a mixer head 604. The mixer head 604 is supplied with respective parts of a two-part resin, from first and second respective stores 606, 608, and the two parts are mixed together in the mixer head 604 to from the bumper fascia material that rapidly cures once mixed and injected into the mould. Once the bumper fascia material has solidified the composite bumper 400 can be removed from the mould 304, for example by respective ejector pins 610.

The bumper fascia material introduced into the mould is therefore cured, in step 406, around the bumper reinforcement structure 304 to form the composite bumper 300. In some examples, it shall be appreciated that the curing process performed in step 406, may further serve to solidify or cure the bumper reinforcement structure 304.

Thereafter, the formed composite bumper 300 can be removed from the mould and, optionally, one or more finishing processes may be performed to finish the bumper fascia 302, in step 408. For example, the openings 306 may be formed in the bumper fascia 302 and the A-surface may be treated to produce a desired surface finish.

In this manner, the method 400 combines design optimisation techniques, such as topology optimisation, and additive manufacturing methods to overcome the limitations of conventional manufacturing techniques and produce a lightweight and high performance composite bumper 300.

Many modifications may be made to the above examples without departing from the scope of the present invention as defined in the accompanying claims.

For example, it shall be appreciated that once an arrangement of reinforcement material has been determined for the bumper reinforcement structure 304, in step 402, there is no need to redesign the bumper reinforcement structure 304 during the manufacture of subsequent composite bumpers 300. Instead, the determined arrangement of reinforcement material may be recalled from memory or otherwise pre-programmed into machinery for producing the bumper reinforcement structure, in step 404. Accordingly, in other examples, the method of manufacture may start with the step of forming the bumper reinforcement structure 304 based on the determined arrangement of reinforcement material.

In other examples, it shall also be appreciated that the bumper reinforcement structure 304 may be formed off-site, for example by another manufacturer, since the bumper reinforcement structure 304 is a preformed unitary structure. Hence, in other examples, the composite bumper 300 may be manufactured by receiving or obtaining the preformed bumper reinforcement structure 304 separately and arranging the preformed structure in a predetermined position inside the mould, prior to introduction of the bumper fascia material, in step 406, to form the composite bumper 300.

Moreover, a significant advantage of the invention is that, if the bumper fascia 302 is damaged in a collision, the composite bumper 300 can be restored by extracting the bumper reinforcement structure 304 (which has sufficient structural integrity to remain undamaged) from the bumper fascia material and reforming the composite bumper 300 with replacement bumper fascia material. That is, the bumper reinforcement structure 304 may be extracted from a damaged composite bumper 300 and reused to form a new composite bumper 300, in step 406, by introduction of replacement bumper fascia material around the extract bumper reinforcement structure 304 in the mould.

In this respect, to improve the recyclability of the composite bumper 300, the bumper fascia material may be selected with a lower melting temperature than the reinforcement material. This way, when heat is applied to the composite bumper 300, the bumper fascia material is liquified and the reinforcement material remains in a stable state, allowing for easy separation of the two materials. That is, the bumper reinforcement structure 304 may be formed of a material having a greater melting temperature than the material of the bumper fascia 302, and the composite bumper 300 may be heated to the melting temperature of the bumper fascia material to extract the bumper reinforcement structure 304. Alternatively, chemical breakdown may be used to breakdown the bumper fascia material without damaging the bumper reinforcement structure 304. The skilled person would therefore choose a solvent that will break down the matrix material of the bumper fascia 302 into liquid form but not the reinforcement material of the bumper reinforcement structure 304. This method may be suitable where the bumper fascia material is a thermoset matrix material, for example.

Hence, embodiments of the invention also relate to a method of manufacture that involves extracting or removing a bumper reinforcement structure 304 from a first composite bumper 300, for example by heating or chemical breakdown of the bumper fascia 302, and using the extracted bumper reinforcement structure 304 as the preformed structure, in step 406, for forming a new composite bumper by introducing bumper fascia material around the extracted bumper reinforcement structure 304 in a mould. Hence, a new composite bumper 300 may be formed comprising a recycled bumper reinforcement structure 304 extracted from another composite bumper.

The manufacturing process of the invention therefore includes the recycling of components made of recyclable materials and using those materials in the manufacture of composite bumpers of the invention.

## Claims

1. A method of manufacturing a composite bumper for a vehicle, the method comprising:
introducing a bumper fascia material around a preformed bumper reinforcement structure in a mould, thereby forming a composite bumper comprising a bumper fascia with an integrated bumper reinforcement structure for impact absorption, the bumper reinforcement structure being configured to transmit impact forces, acting on the composite bumper in the event of a collision, to the chassis.

2. A method according to claim 1, further comprising a step, prior to forming the composite bumper, of preforming the bumper reinforcement structure.

3. A method according to claim 2, wherein the bumper reinforcement structure is preformed using one or more additive manufacturing methods.

4. A method according to claim 3, wherein the one or more additive manufacturing methods comprises one or more tape laying or taping steering methods for laying a fibrous material comprising one or more fibres.

5. A method according to claim 4, wherein the one or more fibres comprise at least one layer of fibre-composite tape arranged according to a predetermined continuous path.

6. A method according to claim 4, wherein preforming the bumper reinforcement structure further comprises joining the one or more fibres together to produce a unitary structure, optionally, joining the one or more fibres by welding and/or by an adhesive.

7. A method according to any of claims 2 to 6, wherein the bumper reinforcement structure is preformed outside of the mould prior to forming the composite bumper inside the mould.

8. A method according to any of claims 2 to 6, wherein the bumper reinforcement structure is preformed within the mould, and, optionally, wherein the preform is cured inside the mould during the step of forming the composite bumper.

9. A method according to any of claims 2 to 8, further comprising a step, prior to preforming the bumper reinforcement structure, of designing the bumper reinforcement structure, for integration into a bumper facia, using a computer-implemented design optimisation technique.

10. A method according to claim 9, wherein the design optimisation technique comprises a topology optimisation technique.

11. A method according to claim 10, wherein the topology optimisation technique is configured to design an arrangement of reinforcement material within a boundary of the bumper fascia for transmitting impact forces, acting on the composite bumper in the event of a collision, to the chassis.

12. A method according to claim 11, further comprising:
obtaining a model of the composite bumper; and
providing the model as an input to the topology optimisation technique with one or
more preset parameters including:
one or more load conditions;
one or more properties of the reinforcement material; and/or one or more optimisation constraints, such as: a minimum stiffness or
strength requirement, a minimum damping ratio for one or more impact load conditions. mass minimisation, and/or a manufacturing method choice.

13. A method according to claim 12, wherein the topology optimisation technique is configured to:
iteratively assess the structural integrity of successive arrangements of reinforcement material when subjected to each load condition, and
remove redundant reinforcement material based on the assessment for a subsequent iteration.

14. A method according to claim 1, wherein the bumper reinforcement structure is a recycled bumper reinforcement structure obtained from another composite bumper, and wherein the method further comprises a step, prior to introducing the bumper fascia material, of removing the preformed bumper reinforcement structure from a previous composite bumper.

15. A method according to claim 14, wherein the preformed bumper reinforcement structure is obtained by liquifying the bumper fascia material, and thereby removing the bumper reinforcement structure from the previous composite bumper.

16. A method according to any preceding claim, wherein the composite bumper is formed by injection moulding, the bumper fascia material being injected into the mould.

17. A method according to any preceding claim, wherein the bumper fascia material is a two-part resin, such as a polymer or a biopolymer.

18. A composite bumper for attachment to a chassis of a vehicle, the composite bumper comprising:
a bumper fascia; and
an integrated bumper reinforcement structure;
wherein the bumper reinforcement structure is integrated into, and extends along, the bumper fascia for impact absorption, the bumper reinforcement structure being configured to transmit impact forces, acting on the composite bumper in the event of a collision, to the chassis.

19. A composite bumper according to claim 18, wherein the bumper reinforcement structure is a unitary lattice structure of reinforcement material.

20. A composite bumper according to claim 19, wherein the reinforcement material is a fibrous material comprising one or more fibres.

21. A composite bumper according to claim 20, wherein the bumper reinforcement structure comprises at least one layer of fibre-composite tape configured to form a load bearing member.

22. A composite bumper according to any of claims 18 to 21, wherein a melting temperature of the bumper fascia material is less than a melting temperature of a reinforcement material of the bumper reinforcement structure.

23. A composite bumper according to any of claims 18 to 22, wherein the bumper fascia material comprises a resin, such as a polymer or a biopolymer.

24. A vehicle comprising the composite bumper of any of Claims 18 to 23 or a composite bumper manufactured according to the method of Claims 1 to 17.
